## Europäisches Patentamt
## European Patent Office
## Office européen des brevets

(11) Publication number: **0 090 800**
**B1**

# EUROPEAN PATENT SPECIFICATION

(45) Date of publication of patent specification: **07.01.88**

(21) Application number: **81902874.7**

(22) Date of filing: **01.10.81**

(86) International application number:
**PCT/US81/01326**

(87) International publication number:
**WO 83/01336 14.04.83 Gazette 83/09**

(51) Int. Cl.⁴: **H 01 B 1/00, H 01 B 7/00, H 01 R 4/00, G 01 V 3/18, E 21 B 49/00**

## (54) WELL LOGGING APPARATUS AND METHOD FOR MAKING SAME.

(43) Date of publication of application:
**12.10.83 Bulletin 83/41**

(45) Publication of the grant of the patent:
**07.01.88 Bulletin 88/01**

(84) Designated Contracting States:
**DE FR NL**

(56) References cited:
**SU-A- 306 437
US-A-2 096 359
US-A-3 072 843
US-A-3 134 069
US-A-3 377 549
US-A-3 408 561
US-A-4 152 195
US-A-4 286 217**

(73) Proprietor: **EXPLORATION LOGGING, INC.**
**P.O. Box 214676**
**Sacramento, CA 95815 (US)**

(72) Inventor: **JETER, John Doise**
**1403 Teche Drive**
**St. Martinville, Louisiana 70582 (US)**
Inventor: **MORE, Henry Sanctuary**
**5273 Glancy Drive**
**Carmichael, CA 95608 (US)**

(74) Representative: **Schrimpf, Robert et al**
**Cabinet Regimbeau 26, Avenue Kléber**
**F-75116 Paris (FR)**

## Description

### Background of the Invention
*Field of the Invention*
This invention relates to apparatus for logging wells during drilling and to methods for making such apparatus.

### The Prior Art
Although the advantages of simultaneously drilling and logging a borehole have long been recognized, such services have been developed slowly because of the lack of reliable equipment which can be quickly repaired or replaced in the field.

Many prior art patents disclose various types of electrically insulated sleeves fitted around the drill string with instrumentation just above the drill bit in an attempt to measure while drilling such variables as formation electrical resistivity, self-potential, temperature, pressure, radioactivity, directional deviation of a drill hole, and the like. Examples of such apparatus are shown in US—A—2,568,241 to Martin, US—A—2,930,137 to Arps, US—A—3,149,683 to Clements et al., and US—A—3,293,542 to Piety.

The disadvantages of the sleeves previously proposed for logging while drilling is that they cannot be readily removed and replaced in the field, which severely limits their utility.

US—A—4 286 217 to Planche et al. discloses a well logging apparatus comprising:
— an elongated housing having a longitudinal opening extending through it;
— a replaceable insulating sleeve having a longitudinal opening through it disposed around the housing;
— means on the housing at one end of the sleeve and engaging the said one end of the sleeve and housing to prevent the sleeve from sliding longitudinally relative to the housing in one direction;
— removable means at the other end of the sleeve disposed and arranged to hold the sleeve in compression to make a snug fit of the sleeve on the housing and prevent the sleeve from sliding longitudinally relative to the housing while the apparatus is in the well; and
— sensing means on the sleeve for measuring a characteristic of formations penetrated by the well.

Thus, the insulating sleeve carrying the sensing means can be readily removed and replaced.

However, the Planche et al. logging apparatus is not designed in such a way that the housing thereof is adapted to be secured in a drill string in a well and the only procedure disclosed by Planche et al. for using their logging apparatus is to lower it into the borehole with an electric cable; in other words, the Planche et al. apparatus is not adapted for logging while drilling.

Furthermore, the insulating sleeve carrying the sensing means of the Planche et el. logging apparatus makes a loose fit around the housing and, thus, can rotate freely around the housing;

the compressive forces which may be applied to the ends of the insulating sleeve are ineffective for restraining the insulating sleeve from rotation. Any such relative rotation would destroy the electrical connections to the sensors in the sleeve, and the logging apparatus disclosed in US—A—4 286 217 is not adapted for mounting in a drill string.

### Summary of the Invention
This invention provides an insulating sleeve which can be easily and quickly secured around a drill string above the drill bit, and also be quickly and easily removed and replaced by another sleeve if the first sleeve should become damaged, inoperative, or inapplicable for a particular well logging problem.

Briefly, this invention provides well logging apparatus comprising:
— an elongated housing having a longitudinal opening extending through it;
— a replaceable insulating sleeve having a longitudinal opening through it disposed around the housing;
— means on the housing at one end of the sleeve and engaging the said one end of the sleeve and housing to prevent the sleeve from sliding longitudinally relative to the housing in one direction;
— removable means at the other end of the sleeve disposed and arranged to hold the sleeve in compression to make a snug fit of the sleeve on the housing and prevent the sleeve from sliding longitudinally relative to the housing while the apparatus is in the well; and
— sensing means on the sleeve for measuring a characteristic of formations penetrated by the well;
characterized by the fact that it further comprises:
— means at each end of the housing for securing it in a drill string in a well;
—longitudinally extending mating grooves and splines on the sleeve and housing for preventing rotation of the sleeve relative to the housing and permitting the sleeve to slide longitudinally relative to the housing when the sleeve is replaced;
— the grooves and splines on the sleeve and housing tapering inwardly toward the removable means to provide a close slip-fit of the sleeve on the housing.

In a presently preferred embodiment, the housing is generally cylindrical, one end of the housing is stepped down to a reduced diameter, and the sleeve is disposed around that end. The shoulder where the housing changes diameter limits the longitudinal movement of the sleeve relative to the housing toward the larger-diameter end. Preferably, the external diameter of the sleeve is about the same as that of the unreduced section of the housing. The preferred embodiment also includes a wear ring disposed around the housing between the shoulder and the adjacent end of the sleeve. Means are provided to prevent the wear ring from rotating relative to the housing, and yet let the sleeve slide longitudinally. Preferably, releasable locking means are provided to restrain the ring against sliding.

Preferably, a torque tube is disposed around the reduced diameter portion of the housing adjacent the end of the sleeve remote from the housing shoulder. Suitable means on the torque tube and adjacent portion of the housing prevent the torque tube from rotating relative to the housing, yet permit longitudinal movement of the torque tube along the housing. Means independent of the sleeve are provided for preventing the torque tube from sliding along the housing toward the shoulder in case the sleeve is worn away during drilling.

Mating grooves and splines on the wear ring, sleeve, torque tube, and housing are the presently preferred structure for preventing the wear ring, sleeve, and torque tube from rotating relative to the housing, and yet permit relative longitudinal movement of those elements along the housing.

The sensing means on the sleeve can be any of a variety of devices, such as electrodes for measuring formation electrical resistivity, self-potential, or inductive reactance. The sensing means can be other devices, such as piezoelectric crystals for measuring acoustic properties of adjacent formations in the well bore, or sensors for measuring temperature, pressure, strain, or the like. Means are provided for supplying electrical power to generate signals and for measuring and recording the signals.

The invention also provides a method for making an electrode assembly to be used in a well for measuring electrical resistivity of earth formation traversed by the well, the method including the steps of:

(a) forming a sleeve of insulating material by wrapping resin-coated fibers around an elongated and generally cylindrical mandrel;

(b) embedding at least one electrical conductor in the sleeve;

(e) curing the resin while the fibers are wrapped around the mandrel.

Such a method is disclosed in US—A—3 072 843 to Clements et al., along which the sleeve of insulating material is bonded to a metal pipe adapted to be connected to a drill collar in the well.

For making an electrode assembly adapted to slide on and off a drill string, the method according to the invention is characterized by the fact that the mandrel has an exterior surface which converges toward one end so the sleeve is formed with an internal converging surface matching the external surface of the mandrel, and the method further comprises the steps of:

— between steps b and e:

(c) forming a recess in the outer surface of the sleeve to expose the embedded electrical conductor in the vicinity of the recess;

(d) depositing metal within the recess to at least partially fill it and make electrical contact with at least part of the exposed electrical conductor,

— after step e:

(f) slipping the sleeve from the mandrel and thereafter slipping the sleeve onto a drill string having an external surface matching that of the mandrel.

The invention also provides a method for making a logging assembly to be used in a well for measuring a downhole characteristic in the well, the method including the steps of:

(a) forming a sleeve of insulating material by wrapping resin-coated fibers around an elongated and generally cylindrical mandrel;

(b) embedding at least one electrical conductor in the sleeve;

(c) securing sensing means to the sleeve;

(d) connecting the electrical conductor to the sensing means;

(e) curing the resin while the fibers are wrapped around the mandrel;

as it is more specifically disclosed in US—A—3 072 843 and characterized by the fact that for making a logging assembly adapted to slide on and off a drill string, the mandrel has an exterior surface which converges toward one end so the sleeve is formed with an internal converging surface matching the external surface of the mandrel, and the method further comprises, after step e, the step of:

(f) slipping the sleeve from the mandrel and thereafter slipping the sleeve onto a drill string having an external surface matching that of the mandrel.

Brief Description of the Drawings

FIG. 1 is a sectional elevation of the invention mounted in a drill string in a well bore;

FIG. 2 is a view taken on line 2—2 of FIG. 1;

FIG. 3 is a view taken on line 3—3 of FIG. 1;

FIG. 4 is a view taken on line 4—4 of FIG. 1;

FIG. 5 is an enlarged sectional elevation taken on line 5—5 of FIG. 4, and in which the housing is not shown;

FIG. 6 is an enlarged sectional elevation taken on line 6—6 of FIG. 4;

FIG. 7 is an enlarged view taken in the area of 7—7 of FIG. 1;

FIG. 8 is an enlarged view taken in the area of 8—8 of FIG. 1;

FIG. 9 is an end view of the wear ring;

FIG. 10 is a view taken on line 10—10 of FIG. 9;

FIG. 11 is a schematic sectional elevation of a portion of the sleeve before the application of electrode material;

FIG. 12 is a view similar to FIG. 11 showing electrode material applied to the sleeve; and

FIG. 13 is a view similar to FIGS. 11 and 12 showing the electrode in a finished condition.

Description of Specific Embodiments

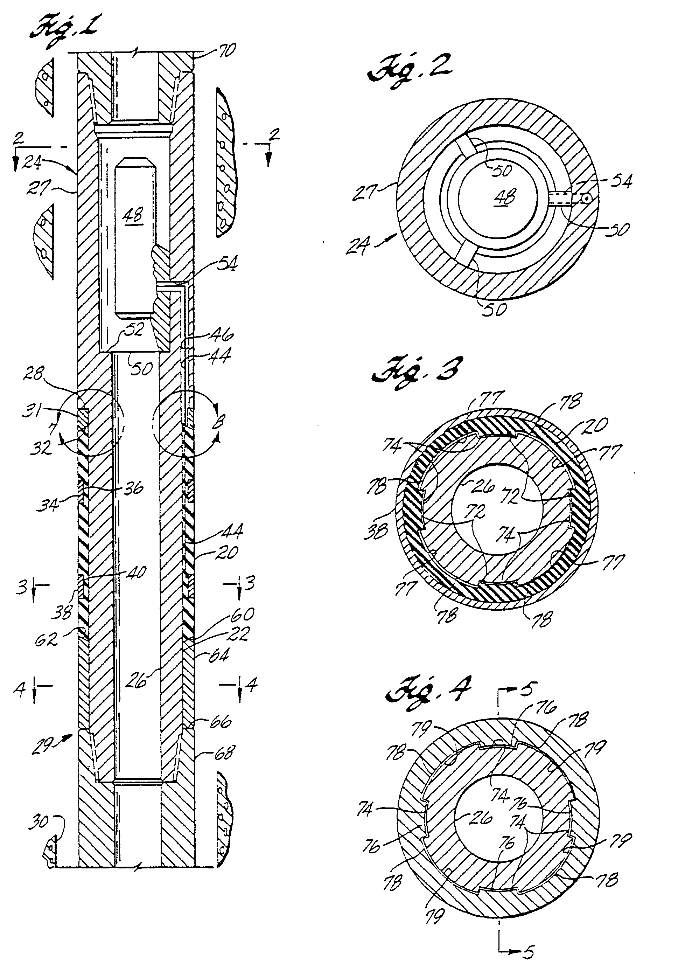

Referring to FIG. 1, an elongated, cylindrical, hollow sleeve 20 makes a close slip-fit over a lower section 22 of an elongated, generally cylindrical housing 24 having a central longitudinal bore 26 extending through it. The housing includes upper section 27 of larger outside diameter than the lower section 22, so that an annular, downwardly facing (as viewed in FIG. 1) shoulder 28 is formed where the larger section 27 steps down to the smallest diameter of lower section 22. The housing is part of a drill string 29 disposed in a well bore 30.

An annular wear ring 31 makes a close slip-fit around the smaller diameter section 22 of the housing so that the upper surface of the wear ring bears against shoulder 28. The lower surface 32 of the wear ring slopes downwardly and outwardly to rest on a matching surface at the upper end of the sleeve.

An upper electrode ring 34 is disposed in an upper circumferential and outwardly opening groove 36 in the outer surface of the sleeve. A lower annular electrode 38 is disposed in a lower circumferential and outwardly opening groove 40 in the outer surface of the sleeve.

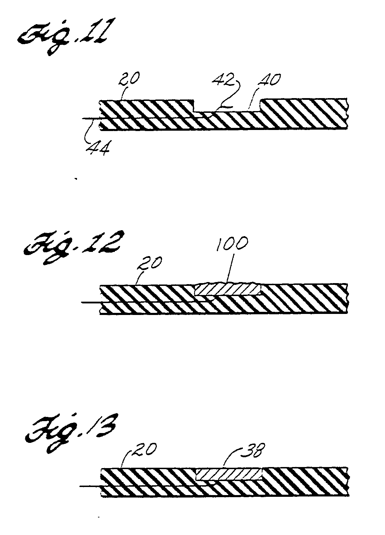

The upper and lower electrodes are connected by separate electrical conductors 42 (one such conductor is shown in FIGS. 11—13) in a cable 44, which extends up through the insulated sleeve and a cable tunnel 46 formed through the wear ring and the wall of the housing.

The upper end of the cable is connected to a power and instrument package 48, which includes an electrical power source (not shown) and appropriate equipment (not shown) for generating, measuring, and recording signals developed in response to various physical characteristics of the adjacent formation in the well bore. The power and instrument package is secured in the center of the central bore 26 of the housing by three equally spaced and radially extending spiders 50 secured at their inner ends to the power and instrument package. The outer ends of the spiders bear against the interior surface of the bore through the housing. The lower edges of the spiders rest on an annular and upwardly facing internal shoulder 52 formed within the bore 26 in the housing. As shown in FIGS. 1 and 2, the cable tunnel includes a horizontal section 54, which extends from the power and instrument package through one of the spiders to join the upper end of the vertical portion of the cable tunnel in the wall of the housing.

The lower end of the insulated sleeve has a downwardly and inwardly extending annular surface, which rests on a matching surface 62 on the upper end of a torque tube 64, which makes a close slip-fit around the lower portion of the housing. The lower end of the torque tube rests on an upwardly facing annular shoulder 66 at the upper end of a drill collar section 68, into which the lower end of the housing is threaded. The upper end of the housing is threaded onto the lower end of a section of drill collar 70 in the drill string.

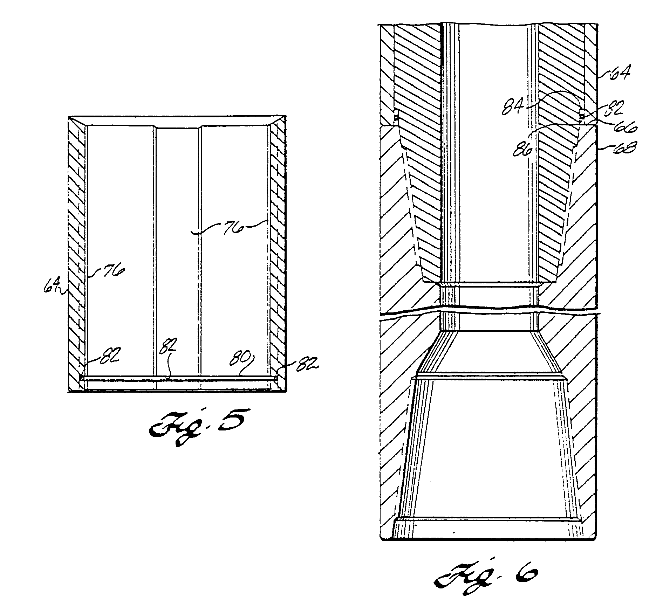

As shown in FIG. 3, the insulating sleeve includes four equally spaced, inwardly projecting, and longitudinally extending splines 72, which each fit into a respective matching outwardly opening and longitudinally extending groove 74 in the outer surface of the housing. The splines on the insulated sleeve extend for the full length of the sleeve. The grooves in the exterior surface of the housing extend from about the midpoint of the wear ring to the lower end of the torque tube, which has four equally spaced, inwardly projecting splines 76 (FIG. 4) which extend longitudinally for the length of the torque tube and fit into the housing grooves.

In effect, the splines 72 on the sleeve form a separate longitudinally extending groove 77 between adjacent splines, and the grooves 74 in the housing form a separate longitudinally extending spline 78 between adjacent grooves.

The bottom surfaces of the grooves and the top surfaces of the splines of the sleeve and the housing taper inwardly away from the shoulder to facilitate assembly and disassembly of the sleeve on the housing. The amount of taper can vary over a wide range, but we have found that a relatively slight taper, say, about 1/8″ in 13 feet (i.e. about 3.2 mm in 4 m), is adequate to provide an easy, but close slip-fit of the sleeve on the housing.

The splines 76 on the torque tube form a separate longitudinally extending groove 79 between adjacent splines. The grooves and splines of the sleeve and torque tube make a close slip-fit with the grooves and splines of the housing so the torque tube is firmly supported against rotation relative to the housing, but is easily moved longitudinally when necessary.

Referring to FIG. 5, which is a view taken on line 5—5 of FIG. 4 (with the housing not shown), a wire retaining ring 80 is disposed in four inwardly opening, circumferential grooves 82 formed in the lower ends of the torque splines 76, so the wire is secured under an outwardly extending and downwardly facing shoulder 84 (FIG. 6), where the o.d. of the housing is reduced for a short, vertical section 86 adjacent the upper end of the lower drill collar section 68. The retaining ring 80 prevents the torque tube from sliding upwardly along the housing if the insulated sleeve should be worn away during drilling operations.

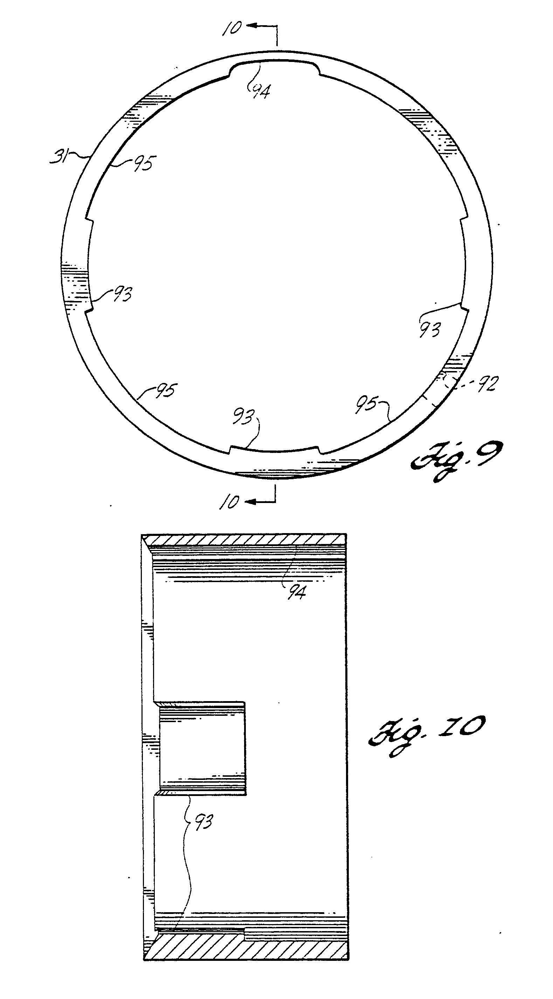

Referring to FIG. 7, the wear ring is prevented from sliding downwardly (if the insulated sleeve should be worn away during drilling operations) by a bolt 90 threaded into the housing wall to project outwardly into the inner end of a bore 92 extending radially through the wear ring wall. More than one such bolt can be used, if desired. Three inwardly and longitudinally extending splines 93 (FIGS. 9 and 10) on the inner surface of the lower half of the wear ring each fit into a respective groove 74 in the outer surface of the housing to prevent the wear ring from rotating on the housing, and yet leave the wear ring free to slide longitudinally when the bolt 90 is removed.

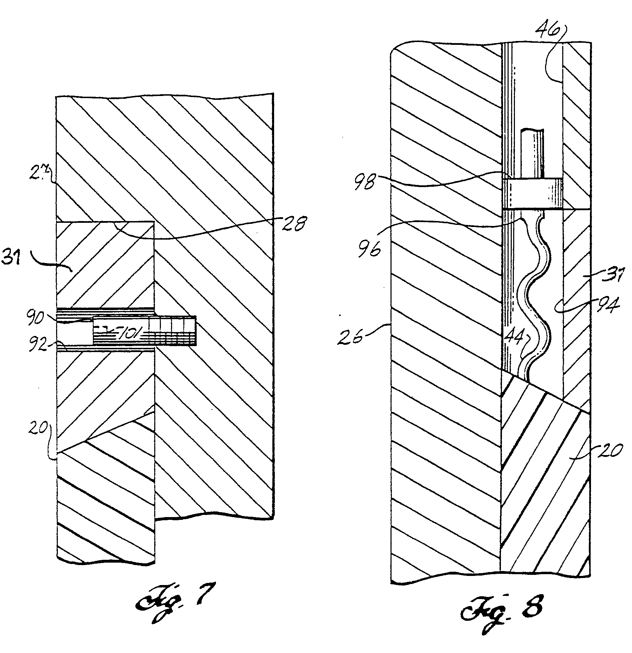

As shown best in FIG. 8, the upper end of the electrical cable 44 extends from the upper end of the insulating sleeve into a longitudinally extending slot 94 (FIGS. 9 and 10) in the interior surface of the wear ring. As shown in FIG. 9, the slot 94 is spaced 90° from two of the wear ring splines 93, which are each spaced 90° from the third spline. Thus, the three wear ring splines each form a separate respective groove 95 between adjacent splines, the groove which includes slot 94 being twice as wide as the other two. Accordingly, the grooves and splines of the wear ring make a close slip-fit with all four of the splines on the housing, but with only three of the grooves in the housing because of wear ring slot 94. This is adequate support to restrain the wear ring from rotating relative to the housing.

The upper end of the cable carries a connector plug 96, (FIG. 8), which releasably fits into a socket 98 sealed in the lower end of the vertical portion of the cable tunnel 46 in the wall of the housing to prevent incursion of drilling fluid into the power and instrument package. The plug 96 is provided with suitable sealing means (not shown), which may be of conventional construction, to prevent incursion of high-pressure fluids from the well bore into the electrical connections made by the plug with the socket.

The material which forms the insulated sleeve must withstand high temperatures and shock. It must also have reasonably good wear resistance to the abrasive conditions encountered during the drilling of most wells, and it must have high electrical resistivity to avoid unacceptable leakage between the drill string and electrodes or other sensing devices on the sleeve. These requirements are met by forming the insulating sleeve from the glass fibers and epoxy resin, which includes particles of abrasion-resistant material, such as aluminum oxide sold under the registered trademark "Carborundum" of Harbison-Carborundum Corp. of Niagara Falls, New York, U.S.A. US—A—3,072,843 to Clements et al. describes the use of such materials to form an electrode sleeve on a drill pipe.

We have prepared suitable insulating sleeves by wrapping glass fibers coated with epoxy resin and Carborundum particles around a mandrel (not shown) which matches the surfaces of the portion of the housing around which the insulated sleeve is to fit. During the wrapping operation, the appropriate electrical conductors are embedded in the wall of the insulating sleeve as it is formed. The top and bottom surfaces of the splines and grooves of the mandrel taper toward one end to match that of the housing. Accordingly, after the resin has cured, the formed sleeve can be easily slipped off the mandrel, and the internal surfaces of the sleeve are tapered to match those on the housing.

The principal steps in making an electrode sleeve assembly, say, useful for electric well logging, are shown in FIGS. 11—13. Outwardly opening, circumferential grooves 40 (only one groove is shown in FIGS. 11—13) are formed in the outer surface of the sleeve to reach the end of one of the conductors 42 embedded in the sleeve wall during the production of the sleeve. The end of the conductor is raised into the groove and stripped of insulation to expose bare metal.

As shown in FIG. 12, a metallic conductor material 100 is deposited in the prepared groove to invest the exposed end of the conductor. The deposited metal may be sprayed into place by the well-known Metco process. It may also be electrodeposited, accumulated by vapor deposition, or any combination of such processes. Spray deposition is presently preferred. As shown in FIG. 13, the deposited metal is smoothed so that its outer surface is flush with the outer surface of the sleeve, leaving an annular electrode 38.

In using the replaceable sleeve of this invention, it is assembled as shown in FIG. 1, so that it is firmly supported on the housing and clamped between the wear ring at its upper end and the torque tube at its lower end. The torque tube is made of steel of sufficient strength to accept the wear and stress imposed by conventional tongs (not shown) when the housing is threaded into, or out of, a drill collar. The annular shoulder 66 on the drill collar holds the torque tube in a snug fit against the sleeve, which is thereby placed in slight, but firm, compression for the drilling operation. The torque tube accepts all of the mechanical wear and tear in connecting or disconnecting the housing in the drill string.

Although the insulated sleeve can vary in length for different uses, for most well logging operations, it will be between about 2 and about 15 feet (i.e. between about 61 cm and about 4.57 m) long. If it is relatively short, say, only a foot or two (i.e. about 30 cm or 61 cm), the torque tube may be omitted, letting the lower end of the electrode sleeve bear directly against the shoulder 66 of the drill collar section 68. Under these circumstances, the tongs, normally used to make up or break apart drill string, would have to be shifted upwardly from their normal position to engage the housing above the insulating sleeve. If the sleeve is more than a few feet (i.e. a few thirties cm) long, it normally would not be feasible to raise the tongs sufficiently high to avoid contact with the sleeve. Accordingly, the torque tube is almost always required for practical operations.

Although the insulating sleeve in the specific embodiment described above is built to facilitate measuring the electrical resistivity of formations traversed by the well bore, the sleeve can be provided with other sensing devices for measuring other characteristics of the formations. For example, piezoelectric crystals can be embedded in the sleeve to measure acoustical properties, or other sensors can be used to measure pressure, temperature, or borehole deviation during the drilling.

An important advantage of this invention is that the insulating sleeve can be quickly and easily assembled on, or removed from, the primary housing. This is essential in most drilling operations where delays in handling equipment at a drilling rig are expensive and sometimes dangerous.

If the insulated sleeve is damaged or worn away during drilling operations, the wear ring protects the annular shoulder 28 on the housing from damage. The retaining ring in the lower end of the torque tube prevents the tube from sliding up and down the housing, avoiding possible damage to the housing or the wear ring.

In the course of prolonged use, the wear ring may eventually be so worn or damaged that it no longer protects the shoulder or holds the insulated sleeve in the desired position on the housing. The wear ring is then easily removed and replaced by a new one.

If desired, a second wear ring of appropriate size and shape can be disposed between the torque tube and the lower end of the insulated sleeve to prevent damage to the upper end of the torque tube when the insulated sleeve is worn away.

The insulated sleeve is easily replaced by simply slipping it off the lower end of the housing after the housing is removed from the drill collar section 68, and the torque tube is slipped off the lower end of the housing. The electrical plug 96 (FIG. 8) is disconnected by removing the bolt 90 (FIG. 7) from the bore 92 in the wear ring wall so the wear ring and insulating sleeve can be lowered a few inches (i.e. a few 2.54 cm) to provide access to the plug 96, which is then removed. A similar plug (not shown) on a replacement sleeve (not shown) is connected to the socket 98 and sealed thereto by appropriate means (not shown). The wear ring is then raised back to its position against shoulder 28 on the primary housing and locked in place by inserting the bolt 90, which has an internal hex socket 101 to facilitate screwing the bolt into and out of the housing wall. The torque tube is slipped over the lower end of the housing to the position shown in FIG. 1. The tongs are applied to the torque tube, and the lower end of the housing is threaded into the upper end of the drill collar section 68 until the torque tube, insulated sleeve, and wear ring are snugly fitted together as shown in FIG. 1.

With the apparatus assembled as shown in FIG. 1, it can be used to log the electrical resistivity of formations traversed as the well is drilled. The logging information can be either recorded with equipment (not shown) in the power and instrument package, or it can be transmitted to the surface during drilling by generating coded pressure pulses in the drilling fluid, such as described in US—A—3,964,556 to Gearhart et al. or US—A—4,078,620 to Westlake et al.

From the foregoing description, it will be apparent that this invention provides an insulated sleeve which can be quickly and snugly fitted around a portion of the drill string so the sleeve is not rotatable relative to the drill string, and so the sleeve can be quickly slipped off the drill string, when required.

## Claims

1. Well logging apparatus comprising:
— an elongated housing (24) having a longitudinal opening (26) extending through it;
— a replaceable insulating sleeve (20) having a longitudinal opening through it disposed around the housing (24);

— means (28, 38) on the housing (24) at one end of the sleeve (20) and engaging the said one end of the sleeve (20) and housing (24) to prevent the sleeve (20) from sliding longitudinally relative to the housing (24) in one direction;
— removable means (64) at the other end of the sleeve (20) disposed and arranged to hold the sleeve (20) in compression to make a snug fit of the sleeve (20) on the housing (24) and prevent the sleeve (20) from sliding longitudinally relative to the housing (24) while the apparatus is in the well (30); and
— sensing means (34, 38) on the sleeve (20) for measuring a characteristic of formations penetrated by the well (30),
characterized by the fact that it further comprises:
— means at each end of the housing (24) for securing it in a drill string (29) in a well (30);
— longitudinally extending mating grooves and splines (72, 74, 77, 78) on the sleeve (20) and housing (24) for preventing rotation of the sleeve (20) relative to the housing (24) and permitting the sleeve (20) to slide longitudinally relative to the housing (24) when the sleeve (20) is replaced;
— the grooves and splines (72, 74, 77, 78) on the sleeve (20) and housing (24) tapering inwardly toward the removable means (64) to provide a close slip-fit of the sleeve (20) on the housing (24).

2. Apparatus according to claim 1 in which the housing (24) is generally cylindrical in cross section, and one end of the housing (24) is of reduced diameter, and the sleeve is disposed around that end of the housing (24).

3. Apparatus according to claim 1 in which the housing (24) includes an outwardly extending shoulder (28) adjacent one end of the sleeve (20) to prevent the sleeve (20) from sliding longitudinally relative to the housing (24) in one direction.

4. Apparatus according to claim 2 in which the outer surface of the sleeve (20) is cylindrical and has a diameter substantially the same as the outer diameter of the unreduced section of the housing (24).

5. Apparatus according to claim 3 which includes an annular wear ring (31) disposed around the housing (24) between the shoulder (28) and the adjacent end of the sleeve (20).

6. Apparatus according to claim 3 which includes means (90, 74, 93) for preventing rotation of the wear ring (31) relative to the housing (24).

7. Apparatus according to claim 5 which includes means (74, 93) to prevent rotation of the wear ring (31) relative to the housing (24) while leaving the wear ring (31) free to slide longitudinally relative to the housing (24) when the sleeve (20) is removed.

8. Apparatus according to claim 7 which includes means (90) for releasably locking the wear ring (31) against sliding longitudinally relative to the housing (24).

9. Apparatus according to claim 5 which includes longitudinally extending and mating grooves and splines (74, 93) on the wear ring (31) and housing (24) to prevent the wear ring from rotating relative to the housing (24) and to permit it to slide longitudinally relative to the housing (24).

10. Apparatus according to claims 1, or 9 which includes a torque tube (64) around the housing (24) at the said other end of the sleeve (20) and means (76, 79) for preventing the torque tube from rotating relative to the housing (24).

11. Apparatus according to claim 10 which includes longitudinally extending and mating grooves and splines (76, 79) on the torque tube (64) and housing (24) for preventing the torque tube (64) from rotating relative to the housing (24).

12. Apparatus according to claim 10 which includes means (80) independent of the sleeve (20) for preventing the torque tube (64) from sliding longitudinally along the housing (24) toward the means (28, 31) at the said one end of the sleeve (20) to prevent the sleeve from sliding longitudinally relative to the housing (24).

13. Apparatus according to claim 1 which includes at least one sensing means (34, 38) on the sleeve (20) for measuring a characteristic of formations penetrated by the well (30) and means (42, 44, 46, 48) for supplying electrical power to the sensing means (34, 38).

14. Apparatus according to claims 1, 2, 3, 4, 5, 6, 7, 8, or 9 which includes at least one electrode (34, 38) mounted on the sleeve (20), an electrical conductor (42, 44) in the sleeve connected to the electrode (34, 38), and electrical power means (48) connected to the conductor (42, 44).

15. Apparatus according to claim 1 in which the said means (28, 31) on the housing and the engaged said one end of the sleeve (20) have mating surfaces (32) that slope outwardly toward the other end of the sleeve (20), and in which the said removable means (64) at the said other end of the sleeve (20) have mating surfaces (62) that slope outwardly toward the said one end of the sleeve (20).

16. A method for making an electrode assembly to be used in a well (30) for measuring electrical resistivity of earth formations traversed by the well (30), the method including the steps of:

(a) forming a sleeve (20) of insulating material by wrapping resin-coated fibers around an elongated and generally cylindrical mandrel;

(b) embedding at least one electrical conductor (42) in the sleeve (20);

(e) curing the resin while the fibers are wrapped around the mandrel;

characterized by the fact that, for making an electrode assembly adapted to slide on and off a drill-string (29), the mandrel has an exterior surface which converges toward one end so the sleeve (20) is formed with an internal converging surface matching the external surface of the mandrel, and the method further comprises the steps of:

— between steps b and e:

(c) forming a recess (40) in the outer surface of the sleeve to expose the embedded electrical conductor (42) in the vicinity of the recess (40),

(d) depositing metal (100) within the recess (40) to least partially fill it and make electrical contact with at least part of the exposed electrical conductor (42),

— after step e:

(f) slipping the sleeve (20) from the mandrel and thereafter slipping the sleeve (20) onto a drill string (29) having an external surface matching that of the mandrel.

17. A method according to claim 16 in which the formation of the recess (40) includes forming an outwardly opening circumferential groove (40) in the outer surface of the sleeve (20).

18. A method according to claim 16 or 17 in which the external surface of the mandrel includes longitudinally extending grooves and splines with surfaces which converge toward one end of the sleeve (20).

19. A method for making a logging assembly to be used a well (30) for measuring a downhole characteristic in the well (30), the method including the steps of:

(a) forming a sleeve (20) of insulating material by wrapping resin-coated fibers around an elongated and generally cylindrical mandrel,

(b) embedding at least one electrical conductor (42) in the sleeve (20),

(c) securing sensing means (34, 38) to the sleeve (20),

(d) connecting the electrical conductor (42) to the sensing means (34, 38),

(e) curing the resin while the fibers are wrapped around the mandrel;

characterized by the fact that, for making a logging assembly adapted to slide on and off a drill string (29), the mandrel has an exterior surface which converges toward one end so the sleeve (20) is formed with an internal converging surface matching the external surface of the mandrel and the method further comprises, after step e, the step of:

(f) slipping the sleeve (20) from the mandrel and thereafter slipping the sleeve (20) onto a drill string (29) having an external surface matching that of the mandrel.

**Patentansprüche**

1. Bohrlochmeßgerät, enthaltend:

ein längliches Gehäuse (24) mit einer sich hindurcherstreckenden Längsöffnung (26);

eine austauschbare Isolierhülse (20), die um dem Gehäuse (24) angeordnet ist, mit einer sie durchsetzenden Längsöffnung;

eine Einrichtung (28, 38) an dem Gehäuse am einen Ende der Hülse (20), die am genannten einen Ende der Hülse (20) und am Gehäuse (24) angreift, um die Hülse (20) am Gleiten in Längsrichtung gegenüber dem Gehäuse (24) in einer Richtung zu hindern;

eine abnehmbare Einrichtung (64) am anderen Ende der Hülse (20), die so angeordnet und eingerichtet ist, daß sie die Hülse (20) zusammengedrückt hält, um eine enge Passung der Hülse (20) auf dem Gehäuse (24) zu erzeugen und die Hülse (20) am Gleiten in Längsrichtung gegenüber dem Gehäuse (24) zu hindern, wenn das Gerät sich im Bohrloch (30) befindet; und

eine Sensoreinrichtung (34, 38) an der Hülse (20) zum Messen einer Charakteristik von Formationen, die von dem Bohrloch (30) durchdrungen werden,

gekennzeichnet durch

die Tatsache, daß es weiterhin enthält:

eine Einrichtung an jedem Ende des Gehäuses (24) zum Befestigen desselben in einem Bohrgestänge (29) in einem Bohrloch (30);

sich in Längsrichtung erstreckende, zueinander passende Nuten und Federn (72, 74, 77, 78) an der Hülse (20) und dem Gehäuse (24) zum Verhindern einer Drehung der Hülse (20) gegenüber dem Gehäuse (24) und zum Ermögliche einer Längsbewegung der Hülse (20) gegenüber dem Gehäuse (24), wenn die Hülse (20) wieder gesetzt wird;

wobei die Nuten und Federn (72, 74, 77, 78) an der Hülse (20) und dem Gehäuse (24) nach innen gegen die abnehmbare Einrichtung (64) schräg zulaufen, um eine enge Gleitpassung der Hülse (20) auf dem Gehäuse (24) zu erzeugen.

2. Gerät nach Anspruch 1, bei dem das Gehäuse (24) im Querschnitt im wesentlichen zylindrisch ist und ein Ende des Gehäuses (24) einen verringerten Durchmesser aufweist und die Hülse um jenes Ende des Gehäuses (24) angeordnet ist.

3. Gerät nach Anspruch 1, bei dem das Gehäuse (24) eine sich nach außen erstreckende Schulter (28) benachbart einem Ende der Hülse (20) aufweist, um die Hülse (20) am Gleiten in Längsrichtung gegenüber dem Gehäuse (24) in einer Richtung zu hindern.

4. Gerät nach Anspruch 2, bei dem die Außenfläche der Hülse (20) zylindrisch ist und einen Durchmesser aufweist, der im wesentlichen der gleiche wie der Außendurchmesser des nichtreduzierten Abschnitts des Gehäuses (24) ist.

5. Gerät nach Anspruch 3, das einen ringförmigen Verschleißring (31) enthält, der um dem Gehäuse (24) zwischen der Schulter (28) und dem benachbarten Ende der Hülse (20) angeordnet ist.

6. Gerät nach Anspruch 3, das eine Einrichtung (90, 74, 93) zur Verhinderung einer Verdrehung des Verschleißringes (31) gegenüber dem Gehäuse (24) aufweist.

7. Gerät nach Anspruch 5, das eine Einrichtung (74, 93) zur Verhinderung einer Verdrehung des Verschleißringes (31) gegenüber dem Gehäuse (24) beim Aufrechterhaltung einer Gleitfähigkeit des Verschleißringes (31) in Längsrichtung gegenüber dem Gehäuse (24) beim Abnehmen der Hülse (20) aufweist.

8. Gerät nach Anspruch 7, das eine Einrichtung (90) zum lösbaren Verriegeln des Verschleißringes (31) gegen ein Gleiten in Längsrichtung gegenüber dem Gehäuse (24) aufweist.

9. Gerät nach Anspruch 5, das sich in Längsrichtung erstreckende und zueinander passende Nuten und Federn (74, 93) an dem Verschleißring (31) und dem Gehäuse (24) aufweist, um den Verschleißring an einer Verdrehung gegenüber dem Gehäuse (24) zu hindern und ein Gleiten desselben in Längsrichtung gegenüber dem Gehäuse (24) zu ermöglichen.

10. Gerät nach Anspruch 1 oder 9, das ein Drehmomentenrohr (64) um dem Gehäuse (24) an dem genannten anderen Ende der Hülse (20) und eine Einrichtung (76, 79) enthält, die das Drehmomentenrohr an einer Verdrehung gegenüber dem Gehäuse (24) hindert.

11. Gerät nach Anspruch 10, das sich in Längsrichtung erstreckende und zueinander passende Nuten und Federn (76, 79) an dem Drehmomentenrohr (64) und dem Gehäuse (24) aufweist, um das Drehmomentenrohr (64) an einer Verdrehung gegenüber dem Gehäuse (24) zu hindern.

12. Gerät nach Anspruch 10, das eine Einrichtung (80) unabhängig von der Hülse (20) aufweist, um das Drehmomentenrohr (64) an einer Verschiebung in Längsrichtung des Gehäuses (24) gegen die Einrichtung (28, 31) an dem genannten einen Ende der Hülse (20) zu verhindern, um die Hülse an einer Verschiebung in Längsrichtung genenüber dem Gehäuse (24) zu hindern.

13. Gerät nach Anspruch 1, das wenigstens eine Sensoreinrichtung (34, 38) an der Hülse (20) zum Messen einer Charakteristik von Formationen, die von dem Bohrloch (30) durchdrungen werden, und eine Einrichtung (42, 44, 46, 48) zum Zuführen elektrischer Energie zu der Sensoreinrichtung (34, 38) aufweist.

14. Gerät nach den Anspruchen 1, 2, 3, 4, 5, 6, 7, 8 oder 9, das wenigstens eine Elektrode (34, 38) enthält, die an der Hülse (20) befestigt ist, sowie einen elektrischen Leiter (42, 44) in der Hülse, der mit der Elektrode (34, 38) verbunden ist und eine elektrische Stromversorgungseinrichtung (48), die mit dem Leiter (42, 44) verbunden ist.

15. Gerät nach Anspruch 1, bei welchem die genannte Einrichtung (28, 31) an dem Gehäuse und das genannte eine Ende der Hülse (20), der in Eingriff ist, Paßflächen (32) aufweisen, die nach außen gegen das andere Ende der Hülse (20) schräg zulaufen, und bei dem die abnehmbare Einrichtung (64) an dem genannten anderen Ende der Hülse (20) und das genannte andere Ende der Hülse (20) Paßflächen (62) aufweisen, die nach außen gegen das genannte eine Ende der Hülse (20) schräg zulaufen.

16. Verfahren zum Herstellen einer Elektrodenanordnung zur Verwendung in einem Bohrloch (30) zur Messung des elektrischen Widerstandes von Erdformationen, die von dem Borloch (30) durchdrungen werden, enthaltend die folgenden Schritte:

(a) Ausbilden einer Hülse (20) aus Isoliermaterial durch Wickeln von harzbeschichteten Fasern um einen langgestreckten und im wesentlichen zylindrischen Dorn,

(b) Einbetten wenigstens eines elektrischen Leiters (42) in die Hülse (20);

(e) Härten des Harzes während die Fasern um den Dorn gewickelt sind;

gekennzeichnet durch

die Tatsache, daß zur Herstellung einer Elektrodenanordnung, die dazu eingerichtet ist, auf ein Bohrgestänge (29) aufgeschoben und davon abgeschoben zu werden, der Dorn eine Außenfläche aufweist, die gegen ein Ende konvergiert, so daß die Hülse (20) mit einer konvergierenden Innenfläche ausgebildet wird, die der Außenfläche des Dorns entspricht, und daß das Verfahren weiterhin folgende Schritte umfaßt:

Zwischen den Schritten (b) und (e)

(c) Ausbilden einer Vertiefung (40) in der Außenfläche der Hülse, um den eingebetteten elektrischen Leiter (20) in der Nachbarschaft der Vertiefung (40) freizulegen,

(d) Abscheiden von Metall (100) in der Vertiefung (40), um diese wenigstens teilweise auszufüllen und einen elektrischen Kontakt mit wenigstens einem Teil des freigelegten elektrischen Leiters (42) herzustellen,

nach dem Schritt (e):

(f) Abschieben der Hülse (20) von dem Dorn und anschließendes Aufschieben der Hülse (20) auf ein Bohrgestänge (29), das eine Außenfläche aufweist, die der des Dorns gleicht.

17. Verfahren nach Anspruch 16, bei dem die Ausbildung der Vertiefung (40) umfaßt:

Ausbilden einer sich nach außen öffnenden Umfangsrille (40) in der Außenfläche der Hülse (20).

18. Verfahren nach Anspruch 16 oder 17, bei dem die Außenfläche des Dorns sich in Längsrichtung erstreckende Nuten und Federn mit Oberflächen aufweist, die gegen das eine Ende der Hülse (20) konvergieren.

19. Verfahren zum Herstellen einer Meßanordnung zur Verwendung in einem Bohrloch (30) zum Messem einer Abwärtscharakteristik in dem Bohrloch (30), enthaltend die folgenden Schritte:

(a) Ausbilden einer Hülse (20) aus isolierendem Material durch Wickeln von harzbeschichteten Fasern um einen langgestreckten und im wesentlichen zylindrischen Dorn,

(b) Einbetten wenigstens eines elektrischen Leiters (42) in die Hülse (20),

(c) Befestigen von Sensoreinrichtungen (34, 38) an der Hülse (20),

(d) Verbinden des elektrischen Leiters (42) mit den Sensoreinrichtungen (34, 38),

(e) Härten des Harzes, während die Fasern um den Dorn gewickelt sind,

gekennzeichnet durch

die Tatsache, daß zur Herstellung einer Meßvorrichtung, die dazu geeignet ist, auf ein Bohrgestänge auf- und davon abgeschoben zu werden, der Dorn eine Außenfläche aufweist, die gegen ein Ende konvergiert, so daß die Hülse (20) mit einer konvergierenden Innenfläche versehen wird, die mit der Außenfläche des Dorns übereinstimmt, und daß das Verfahren weiterhin nach dem Schritt (e) den Schritt (f) umfaßt:

(f) Abschieben der Hülse (20) von dem Dorn und anschließendes Aufschieben der Hülse (20) auf ein Bohrgestänge (29), das eine Außenfläche aufweist, die der des Dorns gleicht.

## Revendications

1. Un dispositif de reconnaissance de puits, comprenant:

— un carter allongé (24) avec une ouverture longitudinale (26) traversante,

— un manchon isolant remplaçable (20) avec une ouverture longitudinale traversante, disposé autour du carter (24),

— des moyens (28, 38), formés sur le carter (24) à l'une des extrémités du manchon (20), venant en contact avec cette extrémité du manchon (20) et avec le carter (24) pour empêcher que le manchon (20) coulisse longitudinalement par rapport au carter (24) dans un sens,

— des moyens amovibles (64), formés à l'autre extrémité du manchon (20), placés et disposés de manière à maintenir le manchon (20) en compression afin de bien ajuster le manchon (20) sur le carter (24) et empêcher que le manchon (20) coulisse longitudinalement par rapport au carter (24) lorsque le dispositif se trouve dans le puits (30), et

— des moyens capteurs (34, 38), placés sur le manchon (20) pour mesurer une caractéristique des formations traversées par le puits (30),

caractérisé en ce qu'il comprend en outre:

— des moyens, formés à chaque extrémité du carter (24), pour fixer celui-ci à une rame de forage (29) dans un puits (30),

— des gorges et des cannelures homologues s'étendant longitudinalement (72, 74, 77, 78), formées sur le manchon (20) et sur le carter (24), de manière à empêcher la rotation du manchon (20) par rapport au carter (24) et permettre au manchon (20) de coulisser longitudinalement par rapport au carter (24) lorsque l'on remet en place le manchon (20),

les gorges et les cannelures (72, 74, 77, 78) formées sur le manchon (20) et le carter (24) étant inclinées vers l'intérieur en direction des moyens amovibles (64), de manière à permettre un montage coulissant étroitement ajusté du manchon (20) sur le carter (24).

2. Le dispositif de la revendication 1, dans lequel le carter (24) a une forme générale cylindre en coupe, avec l'une de ses extrémités de diamètre plus faible, le manchon étant disposé autour de cette extrémité du carter (24).

3. Le dispositif de la revendication 1, dans lequel le carter (24) comprend un épaulement (28) tourné vers l'extérieur et adjacent à l'une des extrémités du manchon (20), pour empêcher que le manchon (20) coulisse longitudinalement par rapport au carter (24) dans un sens.

4. Le dispositif de la revendication 2, dans lequel la surface extérieure du manchon (20) est cylindrique et possède un diamètre pratiquement identique au diamètre extérieur de la partie de diamètre non réduit du carter (24).

5. Le dispositif de la revendication 3, comprenant une bague d'usure annulaire (31) disposée autour du carter (24) entre l'épaulement (28) et l'extrémité adjacente du manchon (20).

6. Le dispositif de la revendication 3, comprenant des moyens (90, 74, 93) pour empêcher la rotation de la bague d'usure (31) par rapport au carter (24).

7. Le dispositif de la revendication 5, comprenant des moyens (74, 93) pour empêcher la rotation de la bague d'usure (31) par rapport au carter (24), tout en laissant la bague d'usure (31) libre de coulisser longitudinalement par rapport au carter (24) lorsque l'on retire le manchon (20).

8. Le dispositif de la revendication 7, comprenant des moyens (90) pour verrouiller de manière libèrable la bague d'usure (31) à l'encontre d'un coulissement longitudinal par rapport au carter (24).

9. Le dispositif de la revendication 5, comprenant des gorges et des cannelures homologues (74, 93) s'étendant longitudinalement, formées sur la bague d'usure (31) et le carter (24), pour empêcher que la bague d'usure tourne par rapport au carter (24) et pour lui permettre de coulisser longitudinalement par rapport au carter (24).

10. Le dispositif de l'une des revendications 1 et 9, comprenant un tube de torsion (64) disposé autour du carter (24) à ladite autre extrémité du manchon (20), ainsi que des moyens (76, 79) pour empêcher le tube de torsion de tourner par rapport au carter (24).

11. Le dispositif de la revendication 10, comprenant des gorges et des cannelures homologues (76, 79) s'étendant longitudinalement, formées sur le tube de torsion (64) et le carter (24) pour empêcher que le tube de torsion (64) tourne par rapport au carter (24).

12. Le dispositif de la revendication 10, comprenant des moyens (80), indépendants du manchon (20), pour empêcher que le tube de torsion (64) coulisse longitudinalement le long du carter (24) en direction des moyens (28, 31) situés à ladite autre extrémité du manchon (20) pour empêcher que le manchon coulisse longitudinalement par rapport au carter (24).

13. Le dispositif de la revendication 1, comprenant au moins un moyen capteur (34, 38), placé sur le manchon (20) pour mesurer une caractéristique des formations traversées par le puits (30), ainsi que des moyens (42, 44, 46, 48) pour alimenter en énergie électrique les moyens capteurs (34, 38).

14. Le dispositif de l'une des revendications 1, 2, 3, 4, 5, 6, 7, 8 et 9, comprenant au moins une électrode (34, 38) montée sur le manchon (20), un conducteur électrique (42, 44) placé dans le manchon et relié à l'électrode (34, 38), et des moyens d'alimentation en énergie électrique (48) reliés au conducteur (42, 44).

15. Le dispositif de la revendication 1, dans lequel lesdits moyens (28, 31) formés sur le carter et ladite extrémité du manchon (20) qui se trouve en contact ont des surfaces homologues (32) qui sont inclinées vers l'extérieur en direction de l'autre extrémité du manchon (20), et dans lequel lesdits moyens amovibles (64) placés à ladite autre extrémité du manchon (20) et ladite autre extrémité du manchon (20) ont des surfaces homologues (62) qui sont inclinées vers l'extérieur en direction de ladite première extrémité du manchon (20).

16. Un procédé pour réaliser un ensemble d'électrode utilisable dans un puits (30) pour mesurer la résistivité électrique des formations du sol traversées par le puits (30), comprenant les étapes suivantes:

(a) formage d'un manchon (20) de matériau isolant en enroulant des fibres enrobées de résine autour d'un mandrin allongé de forme générale cylindrique,

(b) noyage d'au moins un conducteur électrique (42) dans le manchon (20),

(e) durcissement de la résine une fois que les fibres sont enroulées sur le mandrin,

caractérisé par le fait que, pour réaliser un ensemble d'électrode pouvant être placé et retiré par coulissement sur une rame de forage (29), le mandrin a une surface extérieure qui converge vers l'une de ses extrémités, de sorte que le manchon (20) est formé avec une surface interne convergente homologue de la surface externe du mandrin,

et en ce que le procédé comprend en outre les étapes suivantes:

— entre les étapes (b) et (e):

(c) formation d'un évidement (40) dans la surface extérieure du manchon, de manière à laisser paraître le conducteur électrique (42) noyé au voisinage de l'évidement (40),

(d) dépôt de métal (100) dans l'évidement (40) pour remplir au moins partiellement celui-ci et réaliser un contact électrique au moins avec une partie du conducteur électrique exposé (42),

— après l'étape (e):

(f) retrait par coulissement du manchon (20) hors du mandrin puis placement par coulissement du manchon (20) sur une rame de forage (29) ayant une surface externe homologue de celle du mandrin.

17. Le procédé de la revendication 16, dans lequel la formation de l'évidement (40) comprend la formation d'une gorge circonférentielle (40), s'ouvrant vers l'extérieur, dans la surface extérieure du manchon (20).

18. Le procédé de la revendications 16 ou 17, dans lequel la surface externe du mandrin comporte des gorges et des cannelures s'étendant longitudinalement, avec des surfaces qui convergent vers l'une des extrémités du manchon (20).

19. Un procédé pour réaliser un ensemble de reconnaissance utilisable dans un puits (30) pour mesurer, en fonds de puits, une caractéristique du puits (30), ce procédé comprenant les étapes suivantes:

(a) formage d'un manchon (20) de matériau isolant en enroulant des fibres enrobées de résine autour d'un mandrin allongé de forme générale cylindrique,

(b) noyage d'au moins un conducteur électrique (42) dans le manchon (20),

(c) fixation de moyens capteurs (34, 38) au manchon (20),

(d) liaison du conducteur électrique (42) aux moyens capteurs (34, 38),

(e) durcissement de la résine une fois que les fibres sont enroulés sur le mandrin,

caractérisé en ce que, pour réaliser un ensemble de reconnaissance pouvant être placé et retiré par coulissement sur une rame de forage (29), le mandrin a une surface extérieure qui converge vers l'une de ses extrémités, de sorte que le manchon (20) est formé avec une surface interne convergente homologue de la surface externe du mandrin,

et en ce que le procédé comprend en outre l'étape suivante:

(f) retrait par coulissement du manchon (20) hors du mandrin puis placement par coulissement du manchon (20) sur une rame de forage (29) ayant une surface externe homologue de celle du mandrin.

_Fig.1_

_Fig.2_

_Fig.3_

_Fig.4_

1

*Fig. 5*

*Fig. 6*

Fig. 7

Fig. 8

_Fig._ 9

_Fig._ 10

0 090 800

Fig. 11

20    42   40

44

Fig. 12
20        100

Fig. 13
20        38

5